## Europäisches Patentamt
## European Patent Office
## Office européen des brevets

(11) Publication number: **0 042 433**
**B1**

# EUROPEAN PATENT SPECIFICATION

(45) Date of publication of patent specification: **11.09.85**

(51) Int. Cl.⁴: **G 01 F 1/32**

(21) Application number: **80900793.3**

(22) Date of filing: **02.05.80**

(86) International application number:
**PCT/JP80/00094**

(87) International publication number:
**WO 81/01877 09.07.81 Gazette 81/16**

(54) **KARMAN VORTEX STREET FLOWMETER.**

(30) Priority: **29.12.79 JP 172736/79**

(43) Date of publication of application:
**30.12.81 Bulletin 81/52**

(45) Publication of the grant of the patent:
**11.09.85 Bulletin 85/37**

(84) Designated Contracting States:
**DE FR GB**

(56) References cited:
**JP-A-54 107 362**
**JP-Y-48 017 010**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **WADA, Shunichi**
**Mitsubishi Denki K.K. Himeji Seisakusho, 840**
**Chiyoda-cho Himeji-shi, Hyogo 670 (JP)**

(74) Representative: **Kern, Ralf M., Dipl.-Ing.**
**Kern, Lang, Barg & Partner Patent- und**
**Rechtsanwältsbüro Postfach 14 03 29**
**D-8000 München 5 (DE)**

Courier Press, Leamington Spa, England.

## Description

This invention relates to Kármán vortex street flow meter comprising a vortex generating strut disposed within a horizontal conduit including an introduction passage-way through which a fluid flows in a laminar flow, said strut being substantially orthogonal to the stream of said fluid, and vortex detection means including an ultrasonic transmitter and an ultrasonic receiver, said ultrasonic transmitter being provided to propagate an ultrasonic wave across a stream of a Kármán vortex street which is generated downstream of said strut, said ultrasonic transmitter being disposed opposite to the ultrasonic receiver.

Such a Kármán vortex street flow meter is known from JP—A—54—107362. This known flow meter comrpises also a conduit including a vortex generating column, an ultrasonic wave transmitter driven by an oscillator which transmits ultrasonic waves across a stream of a vortex street which is generated downstream of the vortex generating column. The receiver is connected to a reception unit, in which the generation frequencies of the Kármán vortices are detected. When the velocity of the flow of the fluid is low, the Kármán vortices are weak and give lower degrees of modulation and therefore a temperature difference is given between the clockwise Kármán vortices and the counter-clockwise Kármán vortices by heating a portion of the fluid by the combination of an electric heater and a partition arranged immediately before the vortex generating column. As a result, the ultrasonic waves propagating become those which had been applied with the modulation by the Kármán vortices and the modulation owing to the differences in the rate of propagation by the temperature differences between the clockwise Kármán vortices and the counterclockwise Kármán vortices. Thus it becomes possible to readily detect the Kármán vortices of low velocity of flow.

From Japanese utility model publication No. 17010/1973, US—A—3 680 375 and US—A—3 881 352 there is known a method and an apparatus for measuring the flow speed of a fluid flowing through a conduit by disposing a vortex generating strut within the conduit and detecting a frequency of generation of Kármán's vortices generated downstream thereof with an ultrasonic wave. However, when the fluid has a low flow speed also with this known method respectively apparatus the Kármán vortex street is weak and accordingly the degree of modulation of the propagating ultrasonic wave is also small.

The present invention provides a Kármán vortex street flow meter of the type mentioned above which is characterized in that the introduction passage-way consists of a narrow entrance leading to a relatively wide chamber and in that said transmitter is disposed on the upper surface of the conduit. By this inventive construction it is not always necessary to arrange a special heater immediately before the vortex generating strut and before the ultrasonic transmitter as with the above mentioned known construction so that the stream of the fluid adjacent to the ultrasonic transmitter is not disturbed by such a device like the electric heater.

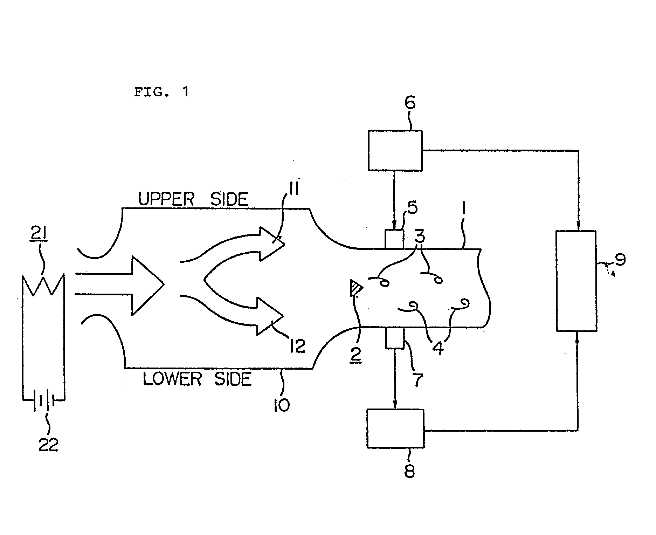

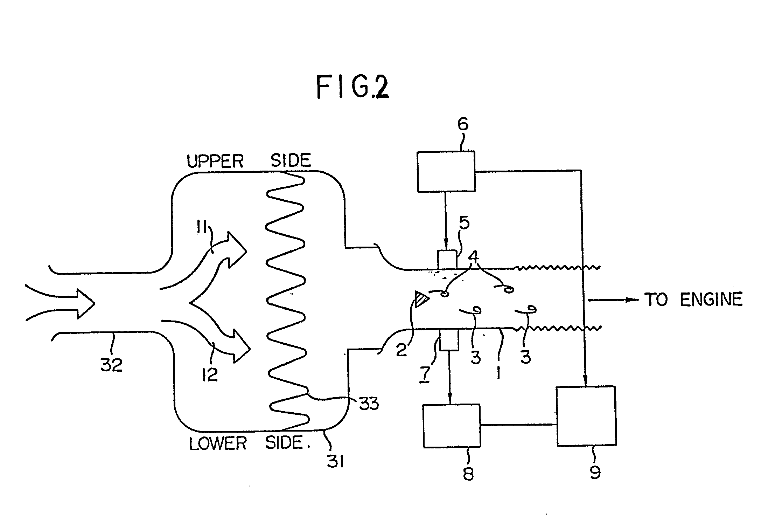

Brief description of the drawings
Fig. 1 and 2 are structural views illustrating different embodiments of the present invention, respectively.

Fig. 1 is a view illustrating one embodiment of the present invention and in this figure a conduit 1 is provided in which a fluid to be measured is flowing. 2 is a vortex generating strut disposed to be substantially perpendicular to the flow of the fluid to be measured and extends also in a horizontal direction. 3 and 4 are vortices of a Kármán vortex street. 5 is an ultrasonic transmitter disposed on the upper portion of the conduit 1. 6 is an oscillation circuit. An ultrasonic receiver 7 is disposed on the lower portion of said conduit 1 opposite to said transmitter 5. Furthermore 8 is a receiving circuit and 9 is a detection circuit. The ultrasonic vortex detector device is comprised of said ultrasonic transmitter 5, the oscillation circuit 6, ultrasonic receiver 7, receiving circuit 8 and detection circuit 9, 10 is a conduit or a relatively large chamber having a fluid intake port which serve to cause a convection flow within the fluid sucked into chamber 10. 11 is a warm fluid flowing on the upper side and 12 is a cold fluid on the lower side.

In the construction as described above, when the measured fluid (e.g. air) from the intake port flows in the direction of the arrow through the interior of the conduit 1, the fluid generates Kármán vortices 3 and 4 by means of the vortex generating strut 2. The ultrasonic transmitter 5 is driven by the oscillation circuit 6 to transmit an ultrasonic wave through the fluid to the receiver 7. At that time, the ultrasonic wave is modulated by said Kármán vortices while propagating through the fluid to be measured. The modulated ultrasonic wave is then received by the receiver 7 and amplified by the receiving circuit 8.

In fig. 1 21 is an electric heater and 22 is an electric source. The fluid flowing through the electric heater 21 is forcedly heated to produce uneveness of a temperature to create positively the action of the convection within a relatively large chamber 10 having a narrow entrance. By creating the action of the convection in this way, a sensitivity of detection of vortices can be also increased with low flow rates of stready-state fluids having no temperature differences. While the electric heater has been used as heating means in fig. 1 the similar effect can be also expected even by using a cooler. By entering a fluid having a fluid component of different specific gravity (density) from the position of the electric heater 21 for mixing, a difference in sound velocity between the upper and lower sides of the fluid caused in accordance with that difference in density is quite identical to that caused from said temperature difference, and the similar effect can be expected.

The present invention is now described in conjunction with an embodiment as shown in fig. 2 used to measure the quantity of sucked air in motor vehicles having a change in temperature or the uneveness of a temperature. In the figure 31 is a case for an air cleaner, 32 a nose for the air cleaner and 33 is a cleaner element (a filter paper). The sucked air in motor vehicles is very frequency put in the state that it is attended with a temperature difference or an uneveness of a temperature in the form of a transient change in temperature. Such air is sucked from the nose 32 for the air cleaner and decreased in flow speed upstream of the cleaner element 33 to effectively enhance the action of the convection to make a temperature difference between the upper and lower sides. Then the air flows toward the upper and lower sides of the vortex generating strut 2. In that case, it is also possible to increase the sensitivity of detection of vortices with low flow rates for quite the same reason as described above. It is very effective for measuring the quantity of sucked air in motor vehicles having the uneveness of the temperature.

In motor vehicles it is also possible to utilize heat coming from an engine and the temperature of a cooling water in order to increase the uneveness of the temperature of the sucked air. In the embodiment of fig. 2 it is only required to dispose the portion of the nose 32 for the air cleaner adjacent to an exhaust manifold or a radiator to effect a forced heating of the air.

As described above, the present invention has been adapted to facilitate the detection of a frequency of generation of vortices of a Kármán vortex street at low flow speeds of a measured fluid without or with the uneveness of a temperature by giving a difference in propagation velocity of the fluid between both sides of a vortex generating strut with an extremely simple construction that an ultrasonic transmitter and a receiver are disposed on the upper and lower sides respectively through the effective utilization of the action of the convection attended on a difference in temperature or density of the fluid. It has been possible to provide a Kármán vortex street flow meter excellent in detecting ability even with low flow speeds and transient changes in temperature.

The present invention is equally applicable for example to Kármán vortex street flow meters for measuring the air flow in motor vehicles.

## Claims

1. A Kármán vortex street flow meter comprising a vortex generating strut (2) disposed within a horizontal conduit (1) including an introduction passage-way through which a fluid flows in a laminar flow, said strut (2) being substantially orthogonal to the stream of said fluid, and vortex detection means (5, 7) including an ultrasonic transmitter (5) and an ultrasonic receiver (7), said ultrasonic transmitter (5) being provided to propagate an ultrasonic wave across a stream of a Kármán vortex street which is generated downstream of said strut (2), said ultrasonic transmitter (5) being disposed opposite to the ultrasonic receiver (7), characterized in that said introduction passage-way consists of a narrow entrance (32) leading to a relatively wider chamber (31; 10) and in that said transmitter (5) is disposed on the upper surface of the conduit (1).

2. A Kármán vortex street flow meter according to claim 1, characterized in that the fluid is heated upstream of the vortex generating strut (2).

3. A Kármán vortex street current meter according to claim 1, characterized in that the fluid is cooled upstream of the vortex generating strut (2).

4. A Kármán vortex street flow meter according to claim 1, characterized in that convection is caused by mixing a dissimilar fluid with the said fluid upstream of the vortex generating strut (2) and utilizing a change in density between the dissimilar fluid and the said fluid.

5. A Kármán vortex street flow meter according to claim 1, characterized in that the chamber is an air cleaner (31) for a motor vehicle and is constructed so that the air sucked in has a temperature difference between the upper and lower sides of the air cleaner (31) upstream of a cleaner element (33) due to convection.

## Patentansprüche

1. Ein Strömungsschattenflüssigkeitsmengenmesser mit einer Wirbel erzeugenden Säule, die in einem horizontalen Durchgang angeordnet ist, welcher einen Einlaßkanal umfaßt, durch den ein Strömungsmittel in laminarer Strömung fließt, wobei die Säule im wesentlichen mit der einen Seitenfläche rechtwinklig (orthogonal) zum Strömungsmittelstrom steht, Wirbelströmungsdetektoren, die einen Ultraschallsender und einen Ultraschallempfänger umfassen, wobei der Ultraschallsender bestimmt ist, eine Ultraschallwelle quer zur Strömung des Strömungsschattens, die stromab der Säule erzeugt wird, auszusenden, und der Ultraschallsender örtlich gegenüber dem Ultraschallempfänger angeordnet ist, dadurch gekennzeichnet, daß der Einlaßkanal aus einem schmalen Eingang (32), welcher zu einer relativ breiteren Kammer (31) führt, besteht, und daß der Sender (5) an der äußeren Oberfläche des Durchgangs (1) angeordnet ist.

2. Ein Strömungsschattenflüssigkeitsmengenmesser gemäß Anspruch 1, dadurch gekennzeichnet, daß das Strömungsmittel stromaufwärts der Säule (2), welche die Wirbelströmung erzeugt, erhitzt wird.

3. Ein Strömungsschattenflüssigkeitsmengenmesser gemäß Anspruch 1, dadurch gekennzeichnet, daß das Strömungsmittel stromabwärts der Säule (2), die die Wirbelströmung erzeugt, gekühlt wird.

4. Ein Strömungsschattenflüssigkeitsmengenmesser gemäß Anspruch 1, dadurch gekennzeichnet, daß Konvektion durch Zumischen eines (in der Dichte) ungleichen Strömungsmittels mit dem Strömungsmittel stromaufwärts der Säule (2), die die Wirbelströmung erzeugt, und durch die Nutzung einer Dichteänderung zwischen den beiden Strömungsmitteln begründet ist.

5. Ein Strömungsschattenflüssigkeitsmengenmesser gemäß Anspruch 1, dadurch gekennzeichnet, daß die Kammer ein Luftfilter (31) für Motorfahrzeuge ist und so konstruiert ist, daß die eingesaugte Luft einen Temperaturunterschied zwischen Ober- und Unterseite des Luftfilters (31) stromaufwärts des Reinigungselements (33) aufgrund der Konvektion hat.

**Revendications**

1. Débimètre de rue de vortices de Karman comportant une colonne produisant des vortices, disposée dans un passage horizontal comportant une tubulure d'admission à travers laquelle coule un fluide en courant laminaire, la colonne étant substantiellement à angle droit (en disposition orthogonale) par rapport au milieu du courant du fluide, des détecteurs de vortices comportant un émetteur et un récepteur d'ultrasons, l'émetteur d'ultrasons étant prévu pour émettre une onde ultrasonique transversalement par rapport à la rue de vortices de Karman qui est générée en aval de la colonne, l'émetteur d'ultrasons étant disposé vis-à-vis du récepteur d'ultrasons caractérisé par le fait que la tubulure d'admission consiste en une entrée étroite (32) qui conduit à une chambre (31) relativement plus large et que l'émetteur (5) est disposé sur la surface extérieure du passage (1).

2. Débimètre de rue de vortices de Karman selon la revendication 1 caractérisé par le fait que le fluide est chauffé en amont de la colonne (2) qui produit les vortices.

3. Débimètre de rue de vortices de Karman selon la revendication 1 caractérisé par le fait que le fluide est refroidi en aval de la colonne (2) qui produit les vortices.

4. Débimètre de rue de vortices de Karman selon la revendication 1 caractérisé par le fait que la convection est causée par l'adjonction en mélangeant d'un fluide dissemblable du fluide mesuré en amont de la colonne (2) qui produit les vortices et par l'utilisation du changement de densité entre les deux fluides.

5. Débimètre de rue de vortices de Karman selon la revendication 1 caractérisé par le fait que la chambre consiste en un filtre à air (31) pour automobiles et est construite de manière à ce que l'air aspiré accuse en raison de la convection une différence de température entre le côté supérieur et le côté inférieur du filtre à air (31) en amont de l'élément d'épuration (33).

FIG. 1

UPPER SIDE

LOWER SIDE

FIG.2

UPPER SIDE

LOWER SIDE.

TO ENGINE

0 042 433